# FASCICULE DE BREVET EUROPEEN

(11) **EP 2 654 220 B1**
(45) Date de publication et mention de la délivrance du brevet: **03.12.2014**
(21) Numéro de dépôt: 13164568.1
(22) Date de dépôt: 19.04.2013
(51) Int. Cl.: H04B 7/185, H04H 20/62

(54) **Système audio pour avion équipé d'une station de contrôle et d'un terminal disposant d'une unité analogique et d'une unité numérique liées par des canaux de communication montant et descendant avec des moyens de commutation assurant la commutation entre ces canaux et les unités analogiques et numériques.**
Audioanordnung für Flugzeug ausgestattet mit einem Steuerungsgerät und einem Endgerät bestehend aus einer analogen und digitalen Einheit verbunden durch Aufwärts und Abwärtskanälen mit Schaltungsmittel zur Schaltung dieser Kanäle zwischen den analogen und digitalen Einheiten.
Audio system for aircraft equipped with a control station and a terminal having an analogue and digital subset linked by uplink and downlink communication channels with commutation means assuring the switching of these channels between the analogue and digital subsets.

(30) Priorité: 20.04.2012 FR 1253669
(43) Date de publication de la demande: 23.10.2013
(73) Titulaire: Team, 94563 Rungis Cedex (FR)
(72) Inventeur: Boulard, Christian, 92140 Clamart (FR)
(74) Mandataire: Parzy, Benjamin Alain

(56) Documents cités:
- WO-A1-97/08829
- WO-A1-98/05137
- US-A- 5 471 509

## Description

L'invention concerne un système audio pour aéronef.

### ARRIERE-PLAN TECHNOLOGIQUE DE L'INVENTION

Certains aéronefs modernes d'une certaine taille sont équipés d'un système audio comportant :
- des radios pour la communication de l'aéronef avec l'extérieur, par exemple une station au sol ou un autre aéronef ;
- des radios pour la navigation de l'aéronef ;
- selon le cas, des terminaux (appelés TMU pour terminal management unit) disposés à proximité des utilisateurs pour mettre à leur disposition des dispositifs d'interface tels que des micros, des casques, des combinés téléphoniques...
- une centrale de gestion audio reliée aux radios (appelée AMU pour audio management unit) et aux terminaux, pour aiguiller les flux audio soit entre un terminal et une radio, soit encore entre deux terminaux.

En général la centrale de gestion audio comporte une partie numérique apte à traiter des signaux numériques, et une partie analogique apte à traiter des signaux analogiques et qui transforme les signaux analogiques en signaux numériques. La partie numérique est utilisée en fonctionnement normal du système audio. La partie analogique permet quant à elle un mode de fonctionnement secours de la centrale, quand la partie numérique est défaillante. L'utilisation de technologies dissymétriques évite les pannes de mode commun.

De façon parallèle, chaque terminal comporte également une partie numérique apte à traiter des signaux numériques, et une partie analogique apte à traiter des signaux analogiques.

Voir WO-A-98/05 137 (Sextant Avionique).

### OBJET DE L'INVENTION

L'invention a pour objet un système audio embarqué sur aéronef de structure simplifiée

### PRESENTATION DE L'INVENTION

En vue de la réalisation de ce but, on propose un système audio pour aéronef comportant :
- des radios de communication et/ou de navigation ;
- une centrale de gestion audio connectée aux radios, et comportant au moins une partie numérique apte à traiter des signaux numériques, et au moins une partie analogique apte à traiter des signaux analogiques ;
- au moins un terminal comportant également une partie numérique apte à traiter des signaux numériques, et une partie analogique apte à traiter des signaux analogiques ;
- au moins deux canaux de communication entre la centrale de gestion audio et le terminal.

Selon l'invention, la centrale de gestion audio et le terminal comportent des moyens de commutation qui sont coordonnés pour connecter sélectivement :
- une voie montante et une voie descendante de la partie numérique de la centrale de gestion audio à respectivement une voie montante et une voie descendante de la partie numérique du terminal via les deux canaux de communication ; ou
- une voie montante et une voie descendante de la partie analogique de la centrale de gestion audio à respectivement une voie montante et une voie descendante de la partie analogique du terminal via les deux canaux de communication.

Ainsi, les deux mêmes canaux de communication sont utilisés pour la communication entre les parties numériques et analogiques de la centrale de communication et le terminal, ce qui simplifie l'architecture du système audio de l'invention.

De préférence, chacun des canaux de communication est constituée par une paire torsadée, dont l'impédance est adaptée.

Selon un aspect particulier de l'invention, les parties numériques de la centrale audio et du terminal sont alimentées par une première source de tension de l'aéronef, la partie analogique de la centrale audio est alimentée par une deuxième source de tension de l'aéronef, tandis que la partie analogique du terminal est alimentée par courant porteur transitant depuis la partie analogique de la centrale audio par l'un des canaux de communication.

Ainsi, il est inutile de prévoir un connecteur d'alimentation de la partie analogique du terminal, ce qui simplifie encore l'architecture du système audio de l'invention.

### DESCRIPTION DES FIGURES

L'invention sera mieux comprise à la lumière de la description qui suit d'un mode de réalisation particulier non limitatif de l'invention, parmi lesquelles :
- la figure 1 est une vue schématique d'un système audio selon l'invention à avec une centrale audio et trois terminaux ;
- la figure 2 est une vue partielle du schéma de la figure 1, montrant le fonctionnement du système audio de l'invention en mode normal ;
- la figure 3 est une vue partielle du schéma de la figure 1, montrant le fonctionnement du système audio de l'invention en mode secours.

### DESCRIPTION DETAILLEE DE L'INVENTION

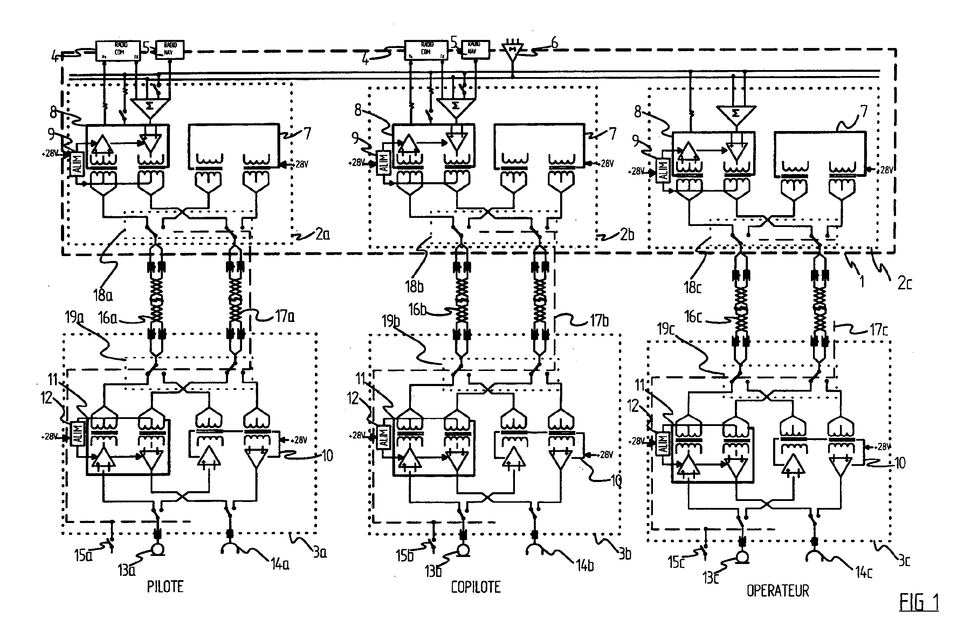

En référence à la figure 1, le système audio pour aéronef de l'invention comporte une centrale de gestion audio 1 (délimité par un cadre en pointillés), comportant ici trois modules 2a,2b,2c (délimités par des sous-cadres en pointillés) et destinés à être interfacés à trois terminaux respectifs, dont un terminal 3a pour le pilote, un terminal 3b pour le copilote, et un terminal 3c pour un opérateur secondaire, par exemple un mécanicien, ou un opérateur de cabine ou de soute.

La centrale de gestion 1 est connectée à des radios, dont une radio de communications 4 avec l'extérieur, et une radio de navigation 5. Par ailleurs, un système d'alerte 6 est ici également connecté à la centrale de gestion 1.

Chaque module 2a,2b,2c comporte ici une partie numérique 7 qui est adaptée à traiter des signaux numériques (tels que des signaux de données ou des signaux de voix numérisés) en provenance ou à destination des équipements connectés au module associé. Cette partie numérique 7 comporte des composants électroniques adaptés à un tel traitement numérique et est alimentée directement par une source de tension 28v continue de l'aéronef. La partie numérique 7 est utilisée lors du fonctionnement normal de la centrale de gestion audio 1.

Chaque module 2a,2b,2c comporte par ailleurs une partie analogique 8 qui gère des signaux analogiques (tels que des signaux de voix) en provenance ou à destination des équipements connectés au module associé. Cette partie analogique 8 est alimentée par une alimentation 9 qui recompose une alimentation 28 volts continue à partir d'une source de secours, par exemple des batteries ou encore un bus d'alimentation essentielle de l'aéronef. La partie analogique 8 est notamment utilisée en cas de défaillance de la partie numérique 7.

La façon dont chaque module est connecté aux différentes radios, au système d'alerte ou à un autre module n'est pas détaillée ici, car elle ne constitue pas le coeur de la présente invention. En particulier, on a représenté ici la connexion des radios 4,5 à la partie analogique 8. Il est bien évident que les radios sont également connectées à la partie numérique 7 des modules concernés.

De façon similaire, chacun des terminaux 3a,3b,3c comporte une partie numérique 10, alimentée par la source de tension 28V continue de l'aéronef, et une partie analogique 11, alimentée par une alimentation 12 qui recompose une alimentation 28 volts continue selon un mode opératoire qui sera décrit plus loin.

Les terminaux 3a,3b,3c sont disposés à proximité de leurs utilisateurs et mettent à leur disposition des équipements d'extrémité, tels que des micros 13a,13b,13c, des casques 14a,14b,14c. Les terminaux 3a,3b,3c sont équipés d'un panneau de commande sur lequel on trouve des sélecteurs 15a,15b,15c (également appelés ACP) qui permettent aux utilisateurs de choisir le mode de fonctionnement du terminal à savoir un mode de fonctionnement normal dans lequel les parties numériques du terminal et du module associé sont sollicitées, ou un mode de fonctionnement secours dans lequel les parties analogiques du terminal et du module associé sont sollicitées, comme cela sera détaillé plus loin.

La liaison entre chacun des modules 2a,2b,2c et les terminaux respectifs est assurée ici par des canaux de communication montant et descendant, respectivement référencés 16a et 17a entre le module 2a et le terminal 3a, 16b et 17b entre le module 2b et le terminal 3b, et 16c et 17c entre le module 2c et le terminal 3c. Ici, chaque canal de communication est constitué d'une paire torsadée dont l'impédance est adaptée.

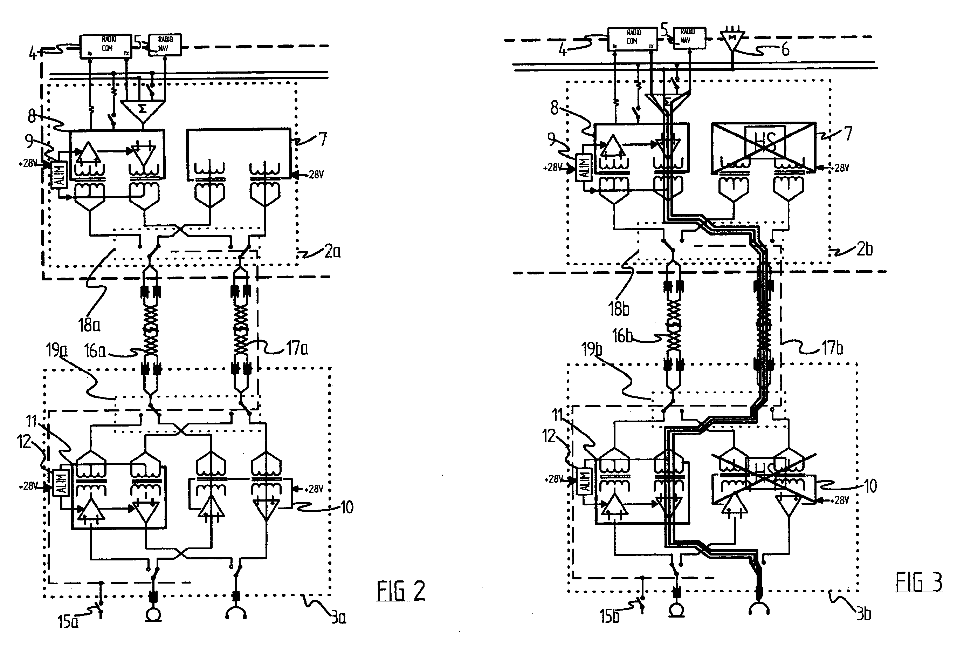

Selon un aspect essentiel de l'invention, chacun des modules comportent des moyens de commutation 18a,18b,18c, et les terminaux comportent des moyens de commutation 19a,19b,19c. Les moyens de commutation d'un module 18a (resp. 18b,18c) sont commandés de concert avec les moyens de commutation 19a (resp 19b,19c) du terminal associé au moyen du sélecteur 15a (resp. 15b,15c) du terminal associé pour :
- dans une première position de commutation illustrée à la figure 2 et correspondant au mode de fonctionnement normal, mettre les canaux de transmission montant et descendant 16a, 17a (respectivement 16b,17b et 16c,17c) en communication avec les voies montante et descendante de la partie numérique 7 du module 2a (respectivement 2b,2c) et les voies montante et descendante de la partie numérique 10 du terminal associé 3a (resp. 3b,3c) ; ou
- dans une deuxième position de commutation illustrée à la figure 3 et correspondant au mode de fonctionnement secours, mettre les canaux de transmission montant et descendant 16a, 17a (respectivement 16b,17b et 16c,17c) en communication avec les voies montante et descendante de la partie analogique 8 du module 2a (respectivement 2b,2c) et les voies montante et descendante de la partie analogique 11 du terminal associé 3a (resp. 3b,3c).

Ainsi, les mêmes canaux de communication permettent de relier les parties numériques respectives d'un terminal et de son module associé, et de relier les parties analogiques respectives du même terminal et du même module.

Sur la figure 2, on constate que les deux canaux 16a,16b sont associés au module 2a sont connectés aux voies montante et descendante de la partie numérique 7 du module 2a par les moyens de commutation 18A, tandis que les mêmes canaux sont associés aux voies montante et descendante de la partie numérique 10 du terminale 3a par les moyens de commutation 19a.

Au contraire, sur la figure 3, les parties numériques sont hors service, et les voies descendantes (ici celles provenant de la radio de communication 4, la radio de navigation 5 et le système d'alerte 6) transitent par la partie analogique 8 du module 2b pour atteindre la partie analogique 11 du terminal 3b via le canal 17b, grâce aux moyens de commutation 18b qui mettent en relation les canaux 16b,17b avec la partie analogique 8 du module 2b, et les moyens de commutation 19b qui mettent en relation les canaux 16b,17b avec la partie analogique 11 du module 3b.

De préférence, les moyens de commutation 18a,19a (respectivement 18b,19b et 18c,19c) sont coordonnés entre eux est sont commandés simultanément par le sélecteur 15a (respectivement 15b,15c) du terminal concerné.

Selon un aspect particulier de l'invention, la partie analogique 11 de chacun des terminaux est alimentée grâce à un apport de courant transitant depuis la partie analogique 8 du module associé par l'un des canaux de communications reliant lesdites parties analogiques, par la technique du courant porteur. De préférence, l'alimentation 12 associée à la partie analogique 11 est agencée pour capter une partie du courant qui est transporté par les canaux de communication lors du fonctionnement en mode secours analogique du système audio de l'invention, et transformer ce courant en une tension stabilisée propre à alimenter les composants électroniques de la partie analogique 11 du terminal. Ainsi, il n'y à pas à prévoir de faire parvenir jusqu'aux terminaux une source de tension de secours telle que la batterie ou le bus d'alimentation essentiel, ce qui simplifie considérablement l'architecture du système audio de l'invention.

L'invention n'est bien sûr pas limitée à ce qui vient d'être décrit, mais englobe également toute variante entrant dans le cadre défini par les revendications.

En particulier, bien que dans l'exemple illustré, la centrale de gestion audio comporte trois modules pour dialoguer avec trois terminaux, l'invention ne se limite pas à une telle centrale audio, et cette dernière pourra comporter plus ou moins de modules. En outre, bien que la centrale de gestion soit ici subdivisée en modules comportant chacun une partie numérique et une partie analogique, les modules étant dans le même nombre que les terminaux, cette subdivision n'est pas essentielle, et la centrale de gestion audio pourra plus généralement comporter au moins une partie numérique et au moins une partie analogique.

## Revendications

1. Système audio pour aéronef comportant :
- des radios (4,5) de communication ou de navigation ;
- une centrale de gestion audio (1) connectée aux radios, et comportant au mois une partie numérique (7) apte à traiter des signaux numériques, et au moins une partie analogique (8) apte à traiter des signaux analogiques ;
- au moins un terminal (3a,3b,3c) comportant également une partie numérique (10) apte à traiter des signaux numériques, et une partie analogique (11) apte à traiter des signaux analogiques ;
- au moins deux canaux de communication (16a,17a ;16b,17b ;16c,17c) entre la centrale de gestion audio et le terminal ;
Le système audio étant **caractérisé en ce que** la centrale de gestion audio et le terminal comportent des moyens de commutation 18A,19a;18b,19b;18c,19c) qui sont coordonnés pour connecter sélectivement :
- une voie montante et une voie descendante de la partie numérique de la centrale de gestion audio à respectivement une voie montante et une voie descendante de la partie numérique du terminal via les deux canaux de communication ; ou
- une voie montante et une voie descendante de la partie analogique de la centrale de gestion audio à respectivement une voie montante et une voie descendante de la partie analogique du terminal via les deux canaux de communication.

2. Système audio selon la revendication 1, dans lequel la partie analogique du terminal est alimentée par courant porteur transporté par l'un des canaux de communication.

3. Système audio selon la revendication 1, dans lequel la partie numérique de la centrale de gestion audio est alimentée par une première source d'alimentation de l'aéronef, tandis que la partie analogique de la centrale de gestion audio est alimentée par une deuxième source d'alimentation de l'aéronef.

4. Système audio selon la revendication 1, dans lequel la central de gestion est accouplée à plusieurs terminaux et comprend des modules en même nombre que les terminaux, chaque module comportant une partie numérique et une partie analogique, chaque module étant reliée à un terminal associé par une deux canaux de transmission (16a,17a 16b,17b ; 16c,17c).

## Patentansprüche

1. Audio-System für ein Flugzeug, umfassend:
- Kommunikations- oder Navigationsfunkgeräte (4, 5),
- eine Audio-Steuerungszentrale (1), die an die Funkgeräte angeschlossen ist und mindestens einen digitalen Abschnitt (7) umfasst, der dazu geeignet ist, digitale Signale zu verarbeiten, sowie mindestens einen analogen Abschnitt (8), der dazu geeignet ist, analoge Signale zu verarbeiten,
- mindestens ein Endgerät (3a, 3b, 3c), das ebenfalls einen digitalen Abschnitt (10) umfasst, der dazu geeignet ist, digitale Signale zu verarbeiten, sowie einen analogen Abschnitt (11), der dazu geeignet ist, analoge Signale zu verarbeiten,
- mindestens zwei Kommunikationskanäle (16a, 17a; 16b, 17b; 16c, 17c) zwischen der Audio-Steuerungszentrale und dem Endgerät,
wobei das Audio-System **dadurch gekennzeichnet ist, dass** die Audio-Steuerungszentrale und das Endgerät Schaltungsmittel (18A, 19a; 18b, 19b; 18c, 19c) umfassen, die derart koordiniert sind, dass sie selektiv anschließen:
- eine Aufwärtsstrecke und eine Abwärtsstrecke des digitalen Abschnitts der Audio-Steuerungszentrale an eine Aufwärtsstrecke bzw. eine Abwärtsstrecke des digitalen Abschnitts des Endgeräts über die beiden Kommunikationskanäle, oder
- eine Aufwärtsstrecke und eine Abwärtsstrecke des analogen Abschnitts der Audio-Steuerungszentrale an eine Aufwärtsstrecke bzw. eine Abwärtsstrecke des analogen Abschnitts des Endgeräts über die beiden Kommunikationskanäle.

2. Audio-System nach Anspruch 1, wobei der analoge Abschnitt des Endgeräts von einem Trägerstrom versorgt wird, der von einem der Kommunikationskanäle transportiert wird.

3. Audio-System nach Anspruch 1, wobei der digitale Abschnitt der Audio-Steuerungszentrale von einer ersten Versorgungsquelle des Flugzeugs versorgt wird, während der analoge Abschnitt der Audio-Steuerungszentrale von einer zweiten Versorgungsquelle des Flugzeugs versorgt wird.

4. Audio-System nach Anspruch 1, wobei die Steuerungszentrale an mehrere Endgeräte gekoppelt ist und Module in gleicher Anzahl wie die Endgeräte umfasst, wobei jedes Modul einen digitalen Abschnitt und einen analogen Abschnitt umfasst, wobei jedes Modul mit einem dazugehörigen Endgerät über einen der beiden Übertragungskanäle (16a, 17a; 16b, 17b; 16c, 17c) verbunden ist.

## Claims

1. Audio system for aircraft including:
- communication or navigation radios (4, 5);
- a central audio controller (1) connected to the radios and having at least one digital portion (7) for processing digital signals and at least one analog portion (8) for processing analog signals;
- at least one terminal (3a, 3b, 3c) also having a digital portion (10) for processing digital signals and an analog portion (11) for processing analog signals;
- at least two communication channels (16a, 17a; 16b, 17b; 16c, 17c) between the central audio controller and the terminal;
the audio system being **characterized in that** the central audio controller and the terminal include switching means (18A, 19a; 18b, 19b; 18c, 19c) that are coordinated to connect selectively:
- an uplink and a downlink of the digital portion of the central audio controller respectively to an uplink and a downlink of the digital portion of the terminal via the two communication channels; or
- an uplink and a downlink of the analog portion of the central audio controller respectively to an uplink and a downlink of the analog portion of the terminal via the two communication channels.

2. Audio system according to Claim 1, wherein the analog portion of the terminal is powered by a carrier current carried by one of the communication channels.

3. Audio system according to Claim 1, wherein the digital portion of the central audio controller is powered by a first power source of the aircraft and the analog portion of the central audio controller is powered by a second power source of the aircraft.

4. Audio system according to Claim 1, wherein the central controller is coupled to a plurality of terminals and includes the same number of modules as there are terminals, each module having a digital portion and an analog portion, and each module being connected to an associated terminal by one two transmission channels (16a, 17a; 16b, 17b; 16c, 17c).
